# DEMANDE DE BREVET EUROPEEN

(11) **EP 3 382 267 A1**
(43) Date de publication de la demande: **03.10.2018**
(21) Numéro de dépôt: 18163356.1
(22) Date de dépôt: 22.03.2018
(51) Int. Cl.: F21S 41/657, F21S 41/47

(54) **DISPOSITIF LUMINEUX AVEC RADIATEUR TRAVERSANT LE BOITIER**

(30) Priorité: 30.03.2017 FR 1752721
(71) Demandeur: Valeo Vision, 93012 Bobigny Cedex (FR)
(72) Inventeur: DEJARDIN, Marc, 7822 MESLIN L'EVQUE (BE)
(74) Mandataire: Valeo Vision

(57) **Abrégé**

La présente invention se rapporte à un dispositif lumineux (1) de véhicule comprenant :
- un boitier (2) avec un premier orifice de montage,
- un radiateur (4) avec des ailettes externes (13, 14) et une portion de support destinée à supporter une source lumineuse,
le radiateur étant agencé au travers du premier orifice de montage, la portion de support étant agencée à l'intérieur et les ailettes externes à l'extérieur ;
le radiateur étant articulé sur le boitier de manière à être bloqué en translation par rapport au boitier, tout en étant libre en rotation dans le premier orifice de montage et autour d'un axe de rotation (A) passant au travers du premier orifice de montage. L'invention vise également un radiateur (4) permettant de réaliser un dispositif lumineux (1) selon l'invention.

## Description

La présente invention se rapporte au domaine des dispositifs lumineux de véhicule automobile.

Plus particulièrement, l'invention se rapporte à des dispositifs lumineux comprenant des moyens de refroidissement de leur(s) source(s) lumineuse(s) et dont le faisceau lumineux doit être réglé en position.

On connait des dispositifs lumineux dans lequel les sources de lumière sont montées en connexion thermique avec un support formant un radiateur. C'est notamment le cas dans le document FR2853717A1. Dans ce document, le radiateur peut comprendre des ailettes donnant à l'extérieur du boitier du dispositif lumineux et peut être réglé verticalement et transversalement au moyen de trois vis de réglage. Cependant, l'agencement permettant ce réglage et ce refroidissement est complexe et emploie différentes pièces.

Le problème technique que vise à résoudre l'invention est donc de simplifier la structure d'un dispositif lumineux dans lequel l'orientation du faisceau doit être réglée tout en permettant de le refroidir.

A cet effet, un premier objet de l'invention est un dispositif lumineux de véhicule comprenant :
- un boitier avec un premier orifice de montage,
- un radiateur avec des ailettes externes et une portion de support destinée à supporter une source lumineuse,
dans lequel le radiateur est agencé au travers du premier orifice de montage, la portion de support étant agencée à l'intérieur du boitier et les ailettes externes étant agencées à l'extérieur du boitier, et
dans lequel le radiateur est articulé sur le boitier de manière à être bloqué en translation par rapport au boitier, tout en étant libre en rotation dans le premier orifice de montage et autour d'un axe de rotation passant au travers du premier orifice de montage.

Ainsi, le radiateur de ce dispositif lumineux peut être lui-même directement entrainé en rotation. Cela simplifie le dispositif lumineux car un seul dispositif d'entrainement peut être employé, sans passer par un réglage en trois points.

On conserve un refroidissement efficace avec un radiateur donnant à l'extérieur du boitier du dispositif lumineux.

Par ailleurs, cela permet de réduire le volume intérieur du boitier en amenant un maximum de calories à l'extérieur de celui-ci. Les degrés de liberté de réalisation du dispositif lumineux sont ainsi augmentés.

Le premier orifice de montage peut être le premier et unique orifice de montage ou le premier de plusieurs orifices de montage.

Le dispositif lumineux selon l'invention peut optionnellement comprendre une ou plusieurs des caractéristiques suivantes :
- l'axe de rotation est agencé transversalement et horizontalement ; la rotation du radiateur permet ainsi un réglage vertical du faisceau lumineux émis par le dispositif lumineux ;
- le dispositif lumineux comprend un organe d'entrainement monté sur le boitier et relié au radiateur de manière à pouvoir l'entrainer en rotation autour de l'axe de rotation dans un sens et dans l'autre ; le support forme ainsi directement un arbre de transmission de la rotation aux sources de lumière ; la réalisation est ainsi simplifiée ;
- l'organe d'entrainement comprend une vis de réglage montée libre en rotation et fixe en translation sur une paroi du boitier, la vis de réglage comprenant un filetage coopérant avec des nervures de réglage portées par le radiateur ; c'est un moyen simple d'entrainer en rotation le radiateur et ainsi la ou les sources lumineuses une fois montées sur le radiateur ;
- le radiateur est agencé de manière à ce que le montage du radiateur dans le boitier se réalise par un mouvement de translation au travers du premier orifice de montage et selon l'axe de rotation ; ainsi le montage est simplifié ; par ailleurs cela permet de monter le radiateur, et donc le support avec les sources de lumière, une fois le boitier fermé par une glace de fermeture, et également de le changer en cas de défaillance ;
- le dispositif lumineux comprend un réflecteur monté sur le radiateur, le réflecteur comprenant une surface réfléchissante agencée en vis-à-vis d'une surface de la portion de support destinée à recevoir, directement ou indirectement, une source lumineuse ; ainsi le radiateur sert également de référentiel au réflecteur ; cela permet un montage plus précis du réflecteur pour collecter les rayons lumineux émis par la ou les sources lumineuses ;
- la surface réfléchissante est agencée de manière à conférer à l'ensemble des rayons lumineux émis par la source lumineuse une photométrie donnée, notamment une photométrie d'éclairage de la route, notamment une photométrie d'un faisceau antibrouillard ou une photométrie d'un faisceau d'éclairage dans les coins (encore appelé fonction « cornering ») ;
- le boitier comprend un deuxième orifice de montage aligné avec le premier orifice de montage, le radiateur traversant également le deuxième orifice de montage et présentant ainsi :
   o une première extrémité portant les ailettes du côté du premier orifice de montage et à l'extérieur du boitier,
   o une deuxième extrémité du côté du deuxième orifice de montage et à l'extérieur du boitier,
   o la portion de support entre la première et la deuxième extrémité, la portion support étant à l'intérieur du boitier ;
ainsi on a un meilleur positionnement du radiateur lors du montage dans le boitier ;
- l'organe d'entrainement est à l'extérieur du boitier et relié à la deuxième extrémité du radiateur de manière à pouvoir l'entrainer en rotation autour de l'axe de rotation dans un sens, et dans l'autre ; on peut ainsi diminuer l'encombrement dans le boitier et, éventuellement avoir un boitier plus petit ;
- l'organe d'entrainement comprend une vis de réglage montée libre en rotation et fixe en translation sur une paroi externe du boitier, la vis de réglage coopérant avec des nervures de réglage portées par la deuxième extrémité du radiateur ;
- le dispositif lumineux comprend une bague de blocage emmanchée sur le radiateur de manière à ce qu'au moins une paroi du boitier soit agencée entre cette bague et un palier de rotation du radiateur, de manière à ce que le radiateur soit bloqué en translation par le boitier dans un sens ou dans l'autre et libre en rotation ; ainsi le boitier forme une butée en translation dans un sens ou dans l'autre, la bague formant contrebutée en translation dans un sens et le palier de rotation formant contrebutée en translation dans l'autre sens ;
- la bague de blocage porte les nervures de réglage ; on simplifie la réalisation du boitier en rapportant les nervures sur une pièce distincte de forme simple, donc plus facile à mouler et à démouler ;
- alternativement, les nervures de réglage peuvent être formées directement sur le radiateur, par exemple par moulage ; l'assemblage est ainsi simplifié ;
- la vis de réglage est agencée et les nervures de réglages sont agencées de part et d'autre de la vis de réglage de manière à ce que les nervures de réglage soient en butées contre la vis de réglage selon une direction de translation sensiblement parallèle à l'axe de rotation du radiateur ; ainsi la vis de réglage fait verrou du radiateur en position ;
- le radiateur comprend :
   o une première portion de guidage agencée à l'intérieur du premier orifice de montage, ce dernier étant agencé de manière à guider en rotation le radiateur par contact glissant entre les bords du premier orifice de montage et la portion de guidage, et/ou
   o une deuxième portion de guidage agencée à l'intérieur du deuxième orifice de montage, ce dernier étant agencé de manière à guider en rotation le radiateur par contact glissant entre les bords du deuxième orifice de montage et la portion de guidage ;
c'est une forme simple de réalisation du guidage sans pièce ou sans élément moulé supplémentaire ;
- dans lequel la portion du radiateur à l'extérieur du boitier et d'un côté du premier orifice de montage, présente un palier de rotation formant un capot de fermeture du premier orifice de montage, notamment en contact glissant avec la surface externe de la paroi du boitier ; ainsi il n'est pas besoin d'ajouter un capot supplémentaire, le radiateur lui-même formant le moyen de fermeture du premier orifice de montage.

L'invention a également pour objet un radiateur destiné à être monté dans un dispositif lumineux de véhicule, le radiateur comprenant :
- une portion de support destinée à supporter une source lumineuse,
- des ailettes externes à l'écart de la portion de support,
- une portion de guidage en rotation autour d'un axe de rotation, ladite portion de guidage étant agencée entre ladite portion de support et les ailettes externes,
- un ensemble de montage agencé de manière à permettre un montage du radiateur bloqué en translation tout en le laissant libre en rotation autour de l'axe de rotation.

Un tel radiateur forme une réalisation du radiateur du dispositif lumineux selon l'invention.

Ainsi, il peut être monté dans un boitier comprenant des éléments coopérant avec son ensemble de montage, en étant agencé au travers d'un premier orifice de montage du boitier, dont le diamètre est tel que les bords de cet orifice de montage sont en contact autour de la portion de guidage lors du mouvement de rotation autour de l'axe de rotation. Ainsi, la portion de guidage forme le guide de rotation par contact glissant le long des bords du premier orifice de montage.

C'est donc un support simple de réalisation tant pour permettre un réglage d'un faisceau lumineux de manière précise que pour refroidir les sources lumineuses.

Le radiateur selon l'invention peut optionnellement présenter une ou plusieurs des caractéristiques suivantes :
- la portion de guidage présente une forme cylindrique de section circulaire ; cela permet un guidage aisé dans un orifice de diamètre ajusté à celui de la section circulaire de cette forme cylindrique ;
- le radiateur s'étend selon l'axe de rotation ; il est ainsi facile à réaliser, à insérer au travers du ou des orifices de montage du boitier et à régler en rotation ;
- le radiateur à la forme d'une barre ; il est ainsi plus facile à insérer dans le boitier au travers de l'orifice de montage ;
- la portion de guidage est circonscrite dans un cylindre d'une section circulaire et d'un axe central donné, la première extrémité étant plus large que cette section donnée et la portion de support et la deuxième extrémité étant inscrite dans ce cylindre, de manière à ce que l'ensemble du radiateur puisse être inséré au travers d'un orifice de section sensiblement identique à celle de la portion de guidage, jusqu'à ce que la première extrémité vienne en buté contre les bords de cet orifice ;
- le radiateur comprend un une paroi transversale à l'axe de rotation et agencée entre les ailettes et la portion de support ; une telle paroi permet de servir de butée lors de l'insertion du radiateur au travers du premier orifice de montage ; une fois le radiateur monté, cette paroi sert à bloquer le mouvement en translation du radiateur dans un sens par rapport au boitier ; elle peut également former un palier de rotation, en appui contre et en contact glissant avec la paroi du boitier qui porte le premier orifice de montage ;
- le radiateur présente:
   o une première extrémité portant les ailettes externes,
   o une deuxième extrémité,
   o la portion de support entre la première et la deuxième extrémité ;
- selon l'alinéa précédent, la deuxième extrémité peut comprendre également des ailettes externes ; ainsi le radiateur peut être monté au travers de deux orifices du boitier d'un dispositif lumineux, avec un refroidissement de chaque côté ;
- le radiateur comprend au moins une gorge recevant un joint agencée entre une première extrémité et la portion de support et/ou un joint, la gorge étant agencée entre une première extrémité du radiateur et la portion de support et/ou un agencée entre une deuxième extrémité du radiateur et la portion de support ; le radiateur peut assurer la fermeture étanche du ou des orifices de montage au travers desquels il est agencé une fois monté ;
- la portion de support comprend au moins une cavité dont la surface est réfléchissante, la cavité étant formée dans le matériau formant la portion de support, notamment par usinage ; on diminue ainsi le nombre de pièces et rend plus précis le positionnement de la ou des sources lumineuses par rapport à la ou aux surfaces réfléchissantes ;
- la portion de support comprend deux évidements séparés par une paroi, un premier évidement d'un côté de la paroi formant la cavité et le deuxième évidement de l'autre côté de la paroi comprenant une surface plane, la surface plane étant percée d'au moins un trou traversant débouchant en vis-à-vis de la ou des surfaces réfléchissantes ; il est ainsi possible de monter une carte de circuit imprimé portant une ou plusieurs sources lumineuses, telles que des diodes électroluminescentes, contre cette surface plane en agençant la ou chaque source lumineuse au niveau et/ou au travers d'un trou traversant ;
- la surface réfléchissante de la ou de chaque cavité présente au moins un foyer de focalisation centré sur le ou l'un des trous traversant ;
- la portion de support comprend des fûts de fixation pour la réception de vis ; cela permet de monter un réflecteur sur le radiateur ;
- la portion de support comprend une paroi comprenant d'un côté une surface plane et de l'autre les fûts de fixation de vis, les fûts de fixation étant agencés au fond de gorges de positionnement formées dans cette paroi ; cela permet de monter une carte de circuit imprimé sur cette surface plane et de fixer un réflecteur de l'autre côté, au moyen de pattes de fixation du réflecteur, ces pattes étant agencées de manière à ce que la surface réfléchissante du réflecteur soit en vis-à-vis de la surface plane ;
- le radiateur comprend au moins une source lumineuse montée sur sa portion de support ; cela permet de réaliser un montage simple et également une interchangeabilité du module générant de la lumière ;
- la ou au moins une des sources lumineuses peut être une diode électroluminescente, ou DEL ; le radiateur selon l'invention est adapté à une DEL car il permet d'en évacuer la chaleur produite directement au travers de son support ;
- le radiateur comprend des pistes électroniques montées sur la portion de support, notamment via une carte, et connectées à la ou aux sources de lumière de manière à l'alimenter en électricité ;
- le radiateur a la forme d'une barre et comprend un manchon optique formé par un matériau transparent et emmanché sur le radiateur, le manchon optique comprenant une portion optique formant un élément d'optique de mise en forme, cette portion optique étant agencée en vis-à-vis de la portion de support et destinée à être en vis-à-vis :
   ∘ d'une source de lumière du radiateur et/ou
   ∘ d'une surface réfléchissante du radiateur, lorsque le radiateur comprend une telle surface réfléchissante ;
- le radiateur comprend une pièce monobloc comprenant la portion de support, les extrémités et les ailettes externes du radiateur ; on facilite ainsi l'assemblage du dispositif lumineux recevant ce radiateur.

Le dispositif lumineux selon l'invention peut comprendre un radiateur selon l'invention.

L'invention a également pour objet un véhicule comprenant un dispositif lumineux selon l'invention, notamment connecté à l'alimentation électrique du véhicule.

Sauf indication contraire, les termes « avant », « arrière », « inférieur », « supérieur », « côté », « transversal » se réfèrent au sens d'émission de lumière hors du dispositif lumineux correspondant.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- la figure 1 est une vue schématique en perspective de face qui représente un dispositif lumineux selon l'invention ;
- la figure 2 est un schéma d'une vue avant d'un radiateur selon l'invention, ce radiateur étant celui qui est monté dans le dispositif lumineux de la figure 1 ;
- la figure 3 est une vue éclatée détaillée du dispositif lumineux de la figure 1 ;
- la figure 4 est une vue éclatée détaillée d'une variante du dispositif lumineux de la figure 1, avec une variante de radiateur selon l'invention.

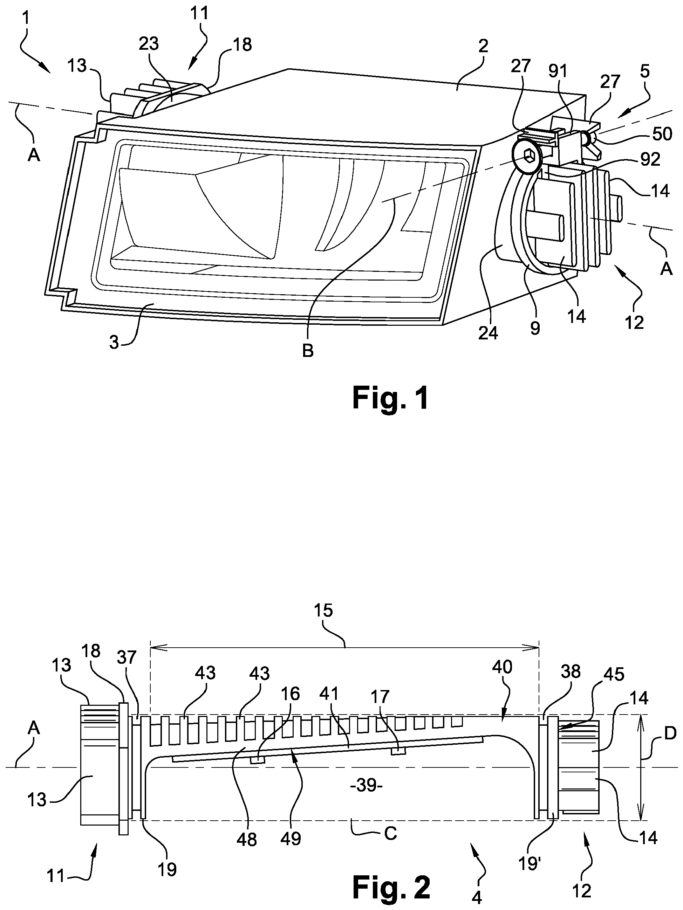

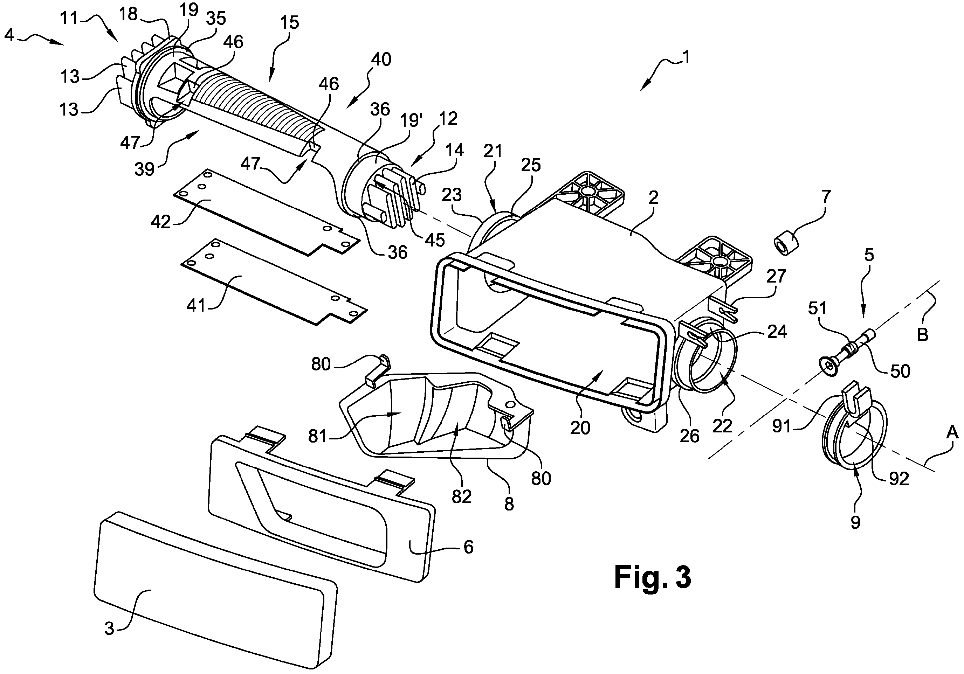

Les figures 1 et 3 illustrent une première variante d'un dispositif lumineux 1 de véhicule selon l'invention. Celui-ci est destiné à être monté à l'avant d'un véhicule notamment à l'avant d'un camion, notamment à l'intérieur de son bouclier avant.

Il s'agit dans cet exemple d'un projecteur 1 antibrouillard, réalisant de plus une fonction d'éclairage dans les coins.

Ce projecteur 1 comprend un boitier 2 présentant une ouverture avant 20 fermée par une glace de fermeture 3, de manière à former une enveloppe isolant l'intérieur du boitier de l'extérieur.

Ce boitier 2 peut comprendre néanmoins une ventilation 7 montée sur un orifice de ventilation, non représenté, à l'arrière du boitier. Cette ventilation permet l'équilibrage de la pression à l'intérieur du boitier 2 selon qu'il fonctionne ou non.

Ce projecteur 1 génère un faisceau lumineux au moyen de sources lumineuses, des DEL dans cet exemple, coopérant avec une optique de mise en forme, ici un réflecteur 8. Le faisceau lumineux sort du projecteur 1 au travers de la glace de fermeture 3 selon une direction d'éclairage, ici vers l'avant du véhicule.

Le projecteur 1 comprend un radiateur 4 formant également support des DEL et permettant d'en évacuer la chaleur. Ce radiateur 4 est illustré en figure 2.

Ce radiateur présente des ailettes externes 13, 14 et une portion de support 15 supportant ici les DEL 16, 17. Dans cet exemple, les DEL 16, 17 sont montées indirectement sur le support via une carte de circuit imprimé 41.

Selon l'invention, comme dans cet exemple, le boitier 2 comprend un premier orifice de montage 21 et le radiateur 4 est monté dans le boitier 2 et sur ses parois en passant au travers de ce premier orifice de montage 21.

La portion de support 15 est agencée à l'intérieur du boitier 2 et les ailettes externes 13, 14 sont agencées à l'extérieur du boitier 2.

Le radiateur 4 est articulé sur le boitier 2 de manière à être bloqué en translation par rapport au boitier, tout en étant libre en rotation dans le premier orifice de montage 21 et autour d'un axe de rotation A passant au travers du premier orifice de montage 21.

Dans l'exemple illustré, cette articulation se fait via deux orifice de montage 21, 22. Le premier orifice 21 est réalisé au travers d'une paroi latérale du boitier 2, la paroi droite en figure 1. Le deuxième orifice 22 est réalisé au travers d'une paroi latérale de l'autre côté du boitier 2, la paroi gauche en figure 1. La figure 1 illustre un projecteur gauche. Le projecteur droit peut être identique au projecteur gauche.

Ici, le radiateur 4 a la forme globalement d'une barre, avec une première extrémité 11 et une deuxième extrémité 12. Les ailettes externes sont réparties en un premier jeu d'ailettes 13 et un deuxième jeu d'ailettes 14, portés respectivement par la première extrémité 11 et la deuxième extrémité 12 du radiateur 4. La portion de support 15 est agencée entre ces première et deuxième extrémités 11, 12 du radiateur 4.

Le radiateur 4 traverse ici de part en part le boitier 2, via les deux orifices de montage 21, 22, une fois monté dans celui-ci. Le radiateur 4 est agencé de manière à ce que la portion de support 15 soit à l'intérieur du boitier 2 entre les parois portant les premier et deuxième orifices de montage 21, 22. Ladite première extrémité 11 étant à l'extérieur à d'un côté du boitier 2 et ladite deuxième extrémité 12 étant à l'extérieur de l'autre côté du boitier 2.

A chacune des extrémités 11, 12 du radiateur 4, ce dernier comprend une portion de guidage 19, 19' agencée entre la portion de support 15 et l'extrémité de radiateur correspondante 11, 12.

Ici ces portions de guidage 19, 19' présentent une forme cylindrique de section circulaire. Cette forme cylindrique présente ainsi des génératrices parallèles à l'axe de rotation A et un axe de cylindre sensiblement confondu avec cet axe de rotation A.

Les orifices de montage 21, 22 présentent une forme circulaire complémentaire de la portion de guidage 19, 19' qui les traverse, de manière à ce qu'une première des portions de guidage 19 et une deuxième des portions de guidage 19' soient en contact glissant respectivement avec les bords du premier orifice de montage 21 et avec les bords du deuxième orifice de montage 22.

Ces deux portions de guidages 19, 19' sont ainsi un exemple de réalisation permettant un guidage en rotation du radiateur 4 autour de l'axe de rotation A.

Comme on peut le voir en figure 2 et 3, le radiateur 4 comprend une pièce monobloc 40 comprenant la portion de support 15, ses première et deuxième extrémités 11, 12, les ailettes externes 13, 14, ainsi que les portions de guidage 19, 19'. Cette pièce monobloc 40 est formée dans un matériau thermiquement conducteur, notamment de l'aluminium, du magnésium ou un polymère chargé de manière à conduire thermiquement la chaleur.

La pièce monobloc 40 peut être obtenue par usinage ou, comme dans cet exemple, par moulage.

Ici, la pièce monobloc 40 comprend un évidement 39 de sorte que la portion de support 15 forme une paroi 48 avec une surface inférieure 49 plane et une face supérieure ici arrondie et avec des nervures de démoulage 43.

La forme de la surface inférieure 49 facilite la fixation de la carte de circuit imprimé 41 par collage, notamment par un adhésif 42.

La forme de la face supérieure facilite le démoulage de la pièce monobloc 40.

La pièce monobloc 40, et donc le radiateur 4, comprend une paroi transversale 18 à l'axe de rotation A. Cette paroi transversale forme un palier de rotation 18.

Le palier de rotation 18 porte d'un côté le premier jeu d'ailettes 13 et est de l'autre relié à la portion de support 15.

Entre ce palier de rotation 18 et la portion de support 15, la pièce monobloc 40 comprend une première gorge 37 recevant un premier joint 35, visible en figure 3. La première portion de guidage 19 est agencée entre cette première gorge 37 et la portion de support 15.

La pièce monobloc 40 présente à partir du palier de rotation 18 jusqu'à la deuxième extrémité 12 du radiateur 4 incluse, une forme de barre circonscrite dans un cylindre C de diamètre D. Ce cylindre C est représenté en pointillés en figure 2. Une telle forme permet d'insérer le radiateur 4 dans le boitier 2 depuis l'extérieur du boitier lors de l'assemblage du projecteur 1, en insérant d'abord le radiateur 4 dans le premier orifice de montage 21, en traversant le boitier, puis en insérant la deuxième extrémité 12 du radiateur au travers du deuxième orifice de montage 22, jusqu'à ce que le palier de montage 18 arrive en butée contre le boitier 2.

Outre le blocage en translation dans un premier sens, ici vers la gauche, ce palier de rotation 18 assure avec le premier joint 35 la fermeture étanche du premier orifice de montage 21.

Selon l'invention, comme dans cet exemple, le premier orifice de montage 21 peut être formé à l'extrémité d'un premier fût 23 du boitier 2 débouchant à l'intérieur du boitier 2.

Le premier fût 23 comprend ici un épaulement 25 le séparant en deux parties :
- une partie de guidage située entre cet épaulement 25 et le reste du boitier 2, dont le diamètre est complémentaire de celui de la première portion de guidage 19, pour améliorer le guidage en rotation,
- une partie de blocage d'un diamètre plus large que la partie de guidage de ce premier fût 23 et venant en contact glissant en rotation avec le palier de rotation 18.

Le premier joint 35 vient en serrage étanche à l'intérieur du premier fût 23, ici contre la partie de blocage et contre l'épaulement 25.

Selon l'invention, comme dans cet exemple, le deuxième orifice de montage 22 peut être formé à l'extrémité d'un deuxième fût 24 débouchant à l'intérieur du boitier 2.

Le deuxième fût 24 comprend ici un épaulement 26 le séparant en deux parties :
- une partie de guidage située à l'extrémité libre de ce deuxième fût 24 et dont le diamètre est complémentaire de celui de la deuxième portion de guidage 19', pour améliorer le guidage en rotation,
- une partie de jonction entre cet épaulement 26 et le reste du boitier 2 et d'un diamètre plus large que la partie de guidage de ce deuxième fût 24.

La pièce monobloc 40 comprend une deuxième gorge 38 recevant un deuxième joint 36, visible en figure 3. La deuxième portion de guidage 19' est agencée entre cette deuxième gorge 37 et le deuxième jeu d'ailettes 14.

Le deuxième joint 36 vient en serrage étanche à l'intérieur du deuxième fût 24, ici contre la partie de jonction et contre l'épaulement 26.

Le blocage en translation dans le deuxième sens est réalisé par une bague 9 de blocage s'emmanchant à l'extérieur et autour de la partie de guidage du deuxième fût 24. Le diamètre interne de la bague 9 est ajusté de manière à pouvoir glisser autour de la partie de guidage du deuxième fût 24. Autrement dit, cette partie de guidage-ci guide par sa surface interne la deuxième portion de guidage 19' et par sa surface externe la bague 9 en rotation autour de l'axe de rotation A.

La bague 9 comprend des pattes de blocage 92 en haut et orientées vers l'intérieur de la bague 9 de manière à venir se loger entre les ailettes 14 du deuxième jeu, contre des faces de blocage 45 verticales et transversales à l'axe de rotation A, empêchant ainsi une translation dans le deuxième sens, ici vers la droite.

Par ailleurs, selon cette réalisation, les pattes de blocage 92 forment un exemple d'un moyen d'entrainement en rotation du radiateur 4, en appuyant sur les ailettes 14 quand la bague 9 tourne.

Selon une réalisation non représenté, la bague peut alternativement être emmanchée en force à l'extrémité d'une portion de guidage, permettant ainsi le blocage en translation dans le deuxième sens. La bague est alors en appui glissant contre l'extrémité libre du deuxième fût ou contre le boitier en l'absence de deuxième fût.

La bague 9 peut alternativement être clippée sur le radiateur 4.

La bague 9 est montée après que le radiateur 4 ait été enfilé au travers du boitier 2, le palier de rotation 18 étant en appui glissant contre le premier fût selon le mouvement de rotation du radiateur.

Ainsi, le palier de rotation 18, les portions de guidage 19 et les faces de blocage 45 forment une ensemble de montage agencé de manière à permettre un montage du radiateur 4 bloqué en translation, tout en le laissant libre en rotation autour de l'axe de rotation A.

La bague 9 fait également partie d'un mécanisme d'entrainement 5 du radiateur 4 en rotation autour de l'axe de rotation A.

Ce mécanisme d'entrainement 5 comprend également des pattes de support 27 et un organe d'entrainement 50, qui est formé ici par une vis de réglage 50.

Les pattes de support 27 sont ici venues de matière en une seule pièce avec le boitier 2. Elles s'étendent parallèlement à l'axe de rotation A et à l'extérieur de l'enveloppe formée par le boitier 2. La vis se réglage 50 est clipée dans ces pattes de support 27 de manière à y être fixe en translation et mobile en rotation autour de son axe longitudinal B, qui lui est orthogonal à l'axe de rotation A du radiateur 4.

La bague 9 comprend en haut une fourche 91 agencée de part et d'autre de la vis de réglage 50. La fourche 91 comprend des nervures de réglage, non représentées, coopérant avec un filetage 51 de la vis de réglage 50. L'agencement de la bague 9 et de la vis de réglage 50 permet de réaliser un mécanisme de vis sans fin, grâce auquel la rotation de la vis de réglage 50 autour de son axe longitudinal B entraine en déplacement vers l'avant ou vers l'arrière la fourche 91 et donc la rotation de la bague 9 autour de l'axe de rotation A du radiateur 4, qui de ce fait est également entrainé en rotation autour de l'axe de rotation A vers l'avant ou vers l'arrière.

Par ailleurs dans l'exemple illustré, la fourche 91 forme un exemple de réalisation permettant d'agencer les nervures de réglage de part et d'autre de l'axe longitudinal B de la vis de réglage et donc de former des butées alignées selon l'axe de rotation A du radiateur 4. Ainsi la vis de réglage 50 verrouille la bague 9 en translation le long de l'axe de rotation A du radiateur, dans les deux sens. La bague 9 étant fixée au radiateur 4, la vis de réglage 50 verrouille donc le radiateur 4 en position dans le boitier 2, comme ici une fois clippée dans les pattes de support 27.

La vis de réglage 50 peut donc, comme ici, former un moyen de verrouillage complémentaire à la patte de blocage 92 et au pallier 18.

Selon une variante non représentée, la bague peut être dépourvue de patte de blocage 92, et seule la vis de réglage assure le blocage dans le deuxième sens.

Selon une variante non représentée, éventuellement combinable avec la variante précédente, la fourche peut être directement formée sur le radiateur et soit le radiateur est dépourvu de pallier de rotation 18, la vis de réglage assurant également le blocage dans le premier sens, soit ce dernier est une pièce montée après. Dans ces deux cas, le radiateur est inséré dans le boitier d'abord par le deuxième orifice de montage, la vis de réglage étant dans la fourche, puis se clippant dans les pattes de support.

La face supérieure de la portion de support 15 comprend ici des trous de fixation 46 positionnés au fond de gorges de positionnement 47.

Le projecteur 1 comprend un réflecteur 8 comprenant deux cavités présentant respectivement une première surface réfléchissante 81 et une deuxième surface réfléchissante 82.

Dans la variante illustrée en figure 3, le montage du réflecteur 8 sur le radiateur 4 est réalisé après le montage du radiateur 4 dans le boitier 2.

Dans cet exemple, le réflecteur 8 comprend des pattes de fixation 80 agencées de manière à se loger dans et à être guidées par les gorges de positionnement 47, jusqu'aux trous de fixation 46, auxquels ces pattes de fixation 80 sont fixées, notamment par vissage.

Les pattes de fixation 80 et les cavités sont agencées de manière à ce que la première et la deuxième surfaces réfléchissantes 81, 82 soient agencées en vis-à-vis respectivement de la première et de la deuxième DEL 16, 17.

Ici, lorsque la première DEL 16 est allumée, la première surface réfléchissante 81 dévie ses rayons de manière à former un faisceau antibrouillard, et lorsque la deuxième DEL 17 est allumée, la deuxième surface réfléchissante 82 dévie ses rayons de manière à former un faisceau d'éclairage dans les coins.

Une fois le réflecteur 8 monté, un masque 6 est placé autour du réflecteur de manière à cacher les différents éléments autre que le réflecteur 8, puis le boitier 2 est fermé par la glace de fermeture 3.

Ainsi, par actionnement de la vis de réglage 50 depuis l'extérieur du boitier 2, on peut faire pivoter vers le haut ou vers le bas les DEL 16, 17 solidairement des surfaces réfléchissantes 81, 82 avec lesquelles elles coopèrent, pour régler en hauteur les faisceaux lumineux correspondants.

Ce réglage peut être comme ici réalisé au travers d'un orifice du bouclier avant.

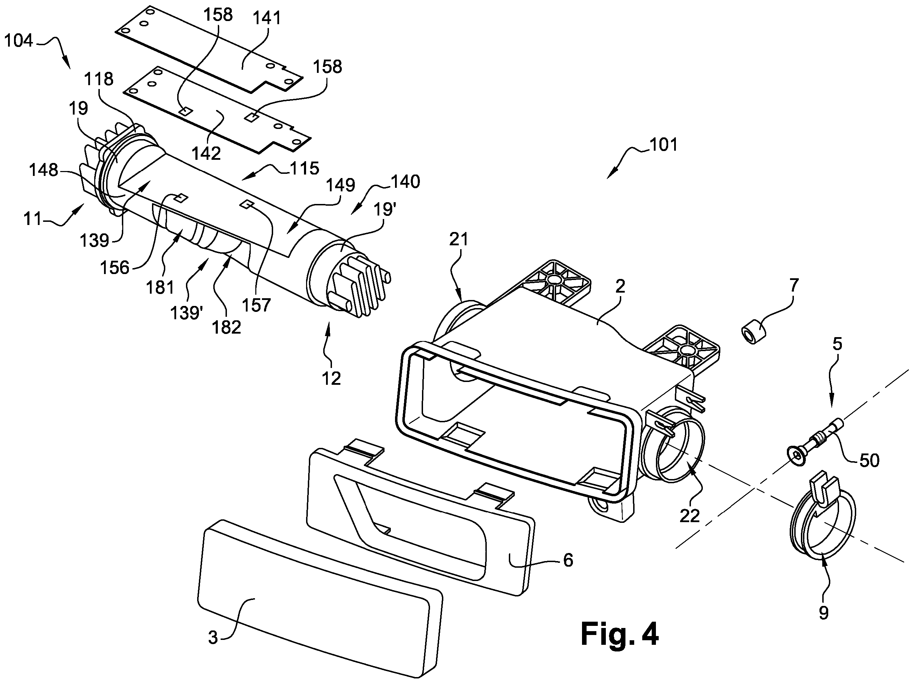

La figure 4 illustre une variante d'un dispositif lumineux 101 et d'un radiateur 104 selon l'invention.

Cette variante diffère de la précédente par son radiateur 104, les autres pièces telles que le boitier 2, le mécanisme d'entrainement 5, la bague de blocage 9, le masque 6 et la glace de fermeture 3 sont identiques à la variante de la figure 3 et agencés ensemble de la même manière. Leur description n'est donc pas reprise et les mêmes références sont employées.

Comme dans la première variante, le radiateur 104 comprend donc une pièce monobloc 140 qui intègre la portion de support 115 ainsi qu'une première extrémité 11 et une deuxième extrémité 12 identiques aux extrémités du radiateur 4 de la figure 3 et agencées de part et d'autre de la portion de support 115.

Le radiateur 104 diffère cependant du radiateur 4 de la variante de la figure 3 par sa portion de support 115. Les autres éléments ne seront donc pas décrits à nouveau.

Dans cette variante, les cavités formant les réflecteurs sont intégrées à la pièce monobloc 140, dans la portion de support. Les cavités sont formées, ici par moulage, directement dans le matériau formant la pièce monobloc 140.

Dans l'exemple illustré en figure 4, la portion de support 115 comprend ainsi deux évidements 139, 139' séparés par une paroi 148.

Le premier évidement 139' est situé en dessous de cette paroi 148, qui porte en face inférieure les surfaces réfléchissantes 181, 182 de deux cavités délimitant ce premier évidement 139'.

Le deuxième évidement 139 est situé au-dessus de cette paroi 148, qui porte en surface supérieure une surface plane 149 percée de deux trous traversants 156, 157 débouchant dans les cavités en vis-à-vis des surfaces réfléchissantes 181, 182.

Une carte de circuit imprimé 141 est collée via un adhésif 142 sur la surface plane 149. Cette carte 141 comprend sur sa face inférieure, à savoir celle qui est collée à la portion de support 115 et donc non visible en figure 4, deux DEL non visibles ici.

Ces DEL traversent des trous 158 de l'adhésif 142 et les trous traversants 156, 157 de la paroi 148 de sorte qu'elles sont en vis-à-vis des surfaces réfléchissantes 181, 182 correspondantes.

Ainsi ces deux surfaces réfléchissantes 181, 182, peuvent collecter les rayons émis par ces DEL et réaliser pour l'une 181 un faisceau antibrouillard et pour l'autre 182 un faisceau d'éclairage dans les coins.

De la même manière que pour la première variante, l'actionnement de la vis de réglage 50 depuis l'extérieur du boitier 2, permet le pivotement vers le haut ou vers le bas des DEL solidairement des surfaces réfléchissantes 181, 182 avec lesquelles elles coopèrent, pour régler en hauteur les faisceaux lumineux correspondants, le radiateur 104 étant au travers des deux orifices de montage 21, 22 du boitier 2 et tournant autour de l'axe de rotation passant par ces derniers.

Dans cette variante illustrée en figure 4, les réflecteurs s'inscrivent donc à l'intérieur du cylindre circonscrit à la portion de support 115 et à la deuxième extrémité 12 du radiateur 104. De ce fait, il est possible de monter le radiateur 104, avec les DELs et les réflecteurs une fois le boitier 2 fermé par la glace de fermeture 3, par un mouvement transversal au travers des orifices de montage 21, 22.

Cela permet également de changer l'ensemble du module lumineux formé par le radiateur 104, les LEDs et les surfaces réfléchissantes 181, 182 au cours de la durée de vie du projecteur 1.

Selon une variante non représentée de la figure 3, à la place d'un réflecteur 8, un manchon optique formé par un matériau transparent peut être emmanché sur la pièce monobloc 40. Dans ce cas, le manchon optique comprend une première et une deuxième portions optiques formant un élément d'optique de mise en forme, telle qu'une lentille. Chacune des portions optiques est agencée en vis-à-vis de la portion de support, une première portion optique étant agencée en vis-à-vis de la première DEL 16 et la deuxième portion optique étant agencée en vis-à-vis de la deuxième DEL 17. Ces portions optiques présentent des dioptres agencés de manière à former respectivement le feu antibrouillard et le feu d'éclairage dans les coins.

Selon une variante non représentée de la figure 4, les surfaces réfléchissantes 181 et 182 sont de type elliptique. Au premier foyer de la première surface réfléchissante 181 et au premier foyer de la deuxième surface réfléchissante 182 sont placées respectivement les première et deuxième DEL. Chaque surface réfléchissante 181 et 182 collecte les rayons émis par la DEL correspondante et les renvoient vers un deuxième foyer correspondant. Un manchon optique formé par un matériau transparent est dans ce cas emmanché sur la pièce monobloc 140. Le manchon optique comprend une première et une deuxième portions optiques formant chacune un élément d'optique de mise en forme distinct, telle qu'une lentille convergente. Chacune des lentilles est agencée en vis-à-vis de la portion de support. Une première lentille est agencée en vis-à-vis de la première surface réfléchissante 181, le foyer de convergence de la première lentille étant au niveau du deuxième foyer de la première surface réfléchissante 181. Une deuxième lentille est agencée en vis-à-vis de la deuxième surface réfléchissante 182, le foyer de convergence de la deuxième lentille étant au niveau du deuxième foyer de la deuxième surface réfléchissante 182. Ces portions optiques présentent des dioptres agencés de manière à former respectivement le feu antibrouillard et le feu d'éclairage dans les coins.

Selon l'invention, par exemple selon une variante non représentée, le réflecteur peut ne pas être porté par le radiateur mais fixé dans le boitier de manière à ce que l'axe de rotation du radiateur passe par un foyer du réflecteur. Dans ce cas, la surface du radiateur portant les sources de lumière est agencée de manière à ce que les sources de lumière, notamment des DEL, soient agencées par rapport à l'axe de rotation et ce foyer de manière à ce que le mouvement seul des DEL assurent le réglage. Par exemple, les DEL peuvent être positionnées sur l'axe de rotation du radiateur et au niveau de ce foyer.

## Revendications

1. Dispositif lumineux (1 ; 101) de véhicule comprenant :
- un boitier (2) avec un premier orifice de montage (21),
- un radiateur (4 ; 104) avec des ailettes externes (13, 14) et une portion de support (15 ; 115) destinée à supporter une source lumineuse (16, 17),
dans lequel le radiateur est agencé au travers du premier orifice de montage, la portion de support étant agencée à l'intérieur du boitier et les ailettes externes étant agencées à l'extérieur du boitier, et
dans lequel le radiateur est articulé sur le boitier de manière à être bloqué en translation par rapport au boitier, tout en étant libre en rotation dans le premier orifice de montage et autour d'un axe de rotation (A) passant au travers du premier orifice de montage
dans lequel le boitier (2) comprend un deuxième orifice de montage (22) aligné avec le premier orifice de montage (21), le radiateur (4 ; 104) traversant également le deuxième orifice de montage et présentant ainsi :
- une première extrémité (11) portant les ailettes externes (13) du côté du premier orifice de montage et à l'extérieur du boitier,
- une deuxième extrémité (12) du côté du deuxième orifice de montage (22) et à l'extérieur du boitier,
- la portion de support (15 ; 115) entre la première et la deuxième extrémité, la portion support étant à l'intérieur du boitier.

2. Dispositif lumineux (1 ; 101) selon la revendication 1, comprenant un organe d'entrainement (50) monté sur le boitier (2) et relié au radiateur de manière à pouvoir l'entrainer en rotation autour de l'axe de rotation (A) dans un sens et dans l'autre.

3. Dispositif lumineux (1 ; 101) selon la revendication 2, dans lequel l'organe d'entrainement comprend une vis de réglage (50) montée libre en rotation et fixe en translation sur une paroi du boitier (2), la vis de réglage comprenant un filetage (51) coopérant avec des nervures de réglage portées par le radiateur (4).

4. Dispositif lumineux (1) selon l'une quelconque des revendications précédentes, dans lequel le radiateur (4) est agencé de manière à ce que le montage du radiateur dans le boitier (2) se réalise par un mouvement de translation au travers du premier orifice de montage (21) et selon l'axe de rotation (A).

5. Dispositif lumineux (1 ; 101) selon la revendication 1 lorsque prise en combinaison avec la revendication 2 ou avec la revendication 3, dans lequel l'organe d'entrainement (50) est à l'extérieur du boitier (2) et relié à la deuxième extrémité (12) du radiateur (4 ; 104) de manière à pouvoir l'entrainer en rotation autour de l'axe de rotation (A) dans un sens, et dans l'autre.

6. Dispositif lumineux (1 ; 101) selon l'une quelconque des revendications précédentes, comprenant une bague de blocage (9) emmanchée sur le radiateur (4 ; 104) de manière à ce qu'au moins une paroi du boitier (2) soit agencée entre cette bague et un palier de rotation (18) du radiateur, de manière à ce que le radiateur soit bloqué en translation par le boitier dans un sens ou dans l'autre et libre en rotation.

7. Dispositif lumineux (1 ; 101) selon l'une quelconque des revendications précédentes, dans lequel le radiateur (4 ; 104) comprend :
- une première portion de guidage (19) agencée à l'intérieur du premier orifice de montage (21), ce dernier étant agencé de manière à guider en rotation le radiateur par contact glissant entre les bords du premier orifice de montage et la portion de guidage, et/ou
- une deuxième portion de guidage (19') agencée à l'intérieur du deuxième orifice de montage (22), ce dernier étant agencé de manière à guider en rotation le radiateur par contact glissant entre les bords du deuxième orifice de montage et la portion de guidage.

8. Dispositif lumineux (1 ; 101) selon l'une quelconques des revendications précédentes, dans lequel la portion du radiateur (11) à l'extérieur du boitier (2) et d'un côté du premier orifice de montage (21), présente un palier de rotation (18) formant un capot de fermeture du premier orifice de montage.

9. Radiateur (4 ; 104) destiné à être monté dans un dispositif lumineux (1) de véhicule, le radiateur comprenant :
- une portion de support (15 ; 115) destinée à supporter une source lumineuse (16,17),
- des ailettes externes (13, 14) à l'écart de la portion de support,
- une portion de guidage (19, 19') en rotation autour d'un axe de rotation (A), ladite portion de guidage étant agencée entre ladite portion de support et les ailettes externes,
- un ensemble de montage (18, 19, 19', 45) agencé de manière à permettre un montage du radiateur bloqué en translation tout en le laissant libre en rotation autour de l'axe de rotation
dans lequel le radiateur présente:
- une première extrémité (11) portant les ailettes externes (13),
- une deuxième extrémité (12) portant également des ailettes externes (14),
- la portion de support (15 ; 115) entre la première et la deuxième extrémité.

10. Radiateur (4 ; 104) selon la revendication 9, dans lequel la portion de guidage (19, 19') présente une forme cylindrique de section circulaire.

11. Radiateur (4; 104) selon la revendication 9 ou 10, le radiateur s'étendant selon l'axe de rotation (A).

12. Radiateur (4 ; 104) selon l'une des revendications 9 à 11, comprenant au moins une gorge (37, 38) recevant un joint (35, 36), la gorge étant agencée entre une première extrémité du radiateur (11) et la portion de support (15; 115) et/ou agencée entre une deuxième extrémité (12) du radiateur et la portion de support.

13. Radiateur (104) selon l'une des revendications 9 à 12, dans lequel la portion de support (115) comprend au moins une cavité dont la surface (181, 182) est réfléchissante, la cavité étant formée dans le matériau formant la portion de support.

14. Radiateur selon l'une des revendications 9 à 13, dans lequel le radiateur a la forme d'une barre et comprend un manchon optique formé par un matériau transparent et emmanché sur le radiateur, le manchon optique comprenant une portion optique formant un élément d'optique de mise en forme, cette portion optique étant agencée en vis-à-vis de la portion de support et destinée à être en vis-à-vis :
- d'une source de lumière portée par le radiateur et/ou
- d'une surface réfléchissante du radiateur, lorsque le radiateur comprend une telle surface réfléchissante.

15. Radiateur selon l'une des revendications 9 à 14, dans lequel le radiateur (4 ; 104) comprend une pièce monobloc comprenant la portion de support (15 ; 115), les extrémités (11, 12) et les ailettes externes (13, 14) du radiateur.
